# EUROPÄISCHE PATENTSCHRIFT

(11) **EP 2 251 667 B1**
(45) Veröffentlichungstag und Bekanntmachung des Hinweises auf die Patenterteilung: **01.01.2014**
(21) Anmeldenummer: 10003509.6
(22) Anmeldetag: 31.03.2010
(51) Int. Cl.: G01N 1/04

(54) **Radspürgerät für einen ABC-Einsatz**
Trace sensor wheel for warfare agents
Roue de capteur pour la détection d'agents de combat

(30) Priorität: 11.05.2009 DE 102009020700
(43) Veröffentlichungstag der Anmeldung: 17.11.2010
(73) Patentinhaber: Rheinmetall Landsysteme GmbH, 29345 Unterlüß (DE)
(72) Erfinder: Gerlach, Klaus-Peter, 34302 Guxhagen (DE); Bräutigam, Martin, 34117 Kassel (DE); Carls, Oliver, 34246 Vellmar (DE)
(74) Vertreter: Dietrich, Barbara

(56) Entgegenhaltungen:
- DE-C1- 3 835 207
- DE-C1- 4 238 399

## Beschreibung

Bekannt sind Spürfahrzeuge für das Aufspüren von nuklear, biologisch und / oder chemisch kontaminierter Luft oder Boden. Diese Spezialfahrzeuge werden von speziell ausgebildeten Personen bedient. Ein mit dem Namen "Fuchs" bekannter Spürpanzer der Anmelderin ist der Internetseite http://www.rheinmetall.com/index.php?lang=2&fid=1581 entnehmbar.

Zum Aufspüren von Bodenkontamination wird in der Praxis ein so genanntes Doppelradspürgerät eingesetzt. Es besteht grundsätzlich aus einem Gehäuse mit Stellmotoren und Getriebe, die ihrerseits zwei Spürradarme bewegen. An den Enden der Spürarme befindet sich jeweils ein Spürrad. Im Spüreinsatz fährt bzw. bewegt sich das Fahrzeug oder dergleichen, an dem derartige Spürräder angebracht sind, in langsamen Tempo über das Gelände, wobei die Spürradarme so eingestellt werden, dass beide Spürräder Bodenkontakt haben. Unebenheiten des Bodens werden dabei ausgeglichen. Zum Aufspüren von Bodenkontaminationen wird nun eines der Spürräder angehoben und mit definiertem Druck an eine Sonde gepresst, während das andere Spürrad Bodenkontakt hält. Nachdem die Sonde ihre Messung abgeschlossen hat und keine Kontamination festgestellt wurde, wird das Spürrad wieder zurück auf den Boden gefahren. Danach wird das andere Spürrad zur Messung an die Sonde geführt. Somit wird ein kontinuierliches Spüren realisiert. So beschrieben in der unveröffentlichten DE 10 2009 010 083.0.

Die DE 42 38 399 C1 betrifft ein mobiles Massenspektrometer zum Aufspüren chemischer Substanzen mit einer Probenentnahmevorrichtung mit drehbarem Spürrad. Das Spürrad zeichnet sich dadurch aus, dass es aus einem Silikonreifen und einer den Silikon reifen tragenden Radfelge besteht. Für den Tandemspürbetrieb werden zwei Spürrader verwendet, deren Spürradarme über eine Antriebseinrichtung gehoben und gesenkt werden, wozu die Spürräder um einen am Fahrzeug befindlichen Drehpunkt verschwenkt werden. Die Spürräder können somit neben einer Aufnahmeposition eine Messposition vor einem Sondenkopf sowie eine Transportposition einnehmen. Der Wechsel der kontaminierten Spürräder erfolgt per Hand über einen Hand-Armschutz.

Obwohl sich diese Konstruktion in der Praxis sehr gut bewährt hat, ist einzuschätzen, dass sie schwer ist aufgrund der aufwändigen Getriebetechnik. Zudem sind eine genaue Positionierung am Fahrzeug (oder Objekt) notwendig und die Einbauhöhe nicht variabel.

Aus diesem Grund stellt sich die Erfindung die Aufgabe, ein Spürgerät aufzuzeigen, das die vorgenannten Probleme nicht mehr ausweist.

Gelöst wird die Aufgabe durch die Merkmale des Patentanspruchs 1. Vorteilhafte Ausführungen sind in den Unteransprüchen aufgeführt.

Der Erfindung liegt die Idee zugrunde, die Funktionsweise zu vereinfachen und einfache bzw. leichte Adaptierbarkeit auch an konstruktiv andere Fahrzeuge / Objekte zu ermöglichen, wobei Gewicht und Kosten gesenkt werden. Diese Idee wird dadurch umgesetzt, dass ein baulich leichter Linearantrieb anstelle des aufwändigen Getriebemechanismus eingebunden wird und dass jeder Spürarm ein federndes Element zum Ausgleich der Bodenunebenheiten bzw. zum Erreichen eines notwendigen Anpressdrucks an den Boden erhält.

Damit verbundene Vorteile sind unter anderem eine bessere Integration in / an ein Fahrzeug, da der lineare Antrieb einfach an die jeweilige Fahrzeughöhe anpassbar ist. Zudem werden klare und weniger umfassende Schnittstellen zum Grundfahrzeug definiert. Der Anbringungsort am Objekt / Fahrzeug wird variabel, da keine Einschränkung der Bodenfreiheit bzw. eine Kollision mit der Fahrzeugachse mehr besteht.

Anhand eines einfachen Ausführungsbeispiels mit Zeichnung soll die Erfindung näher erläutert werden. Es zeigen:
- Fig. 1: eine Darstellung des Anbaus eines Spürgerätes an ein nicht näher dargestelltes Objekt,
- Fig. 2: eine Darstellung des Spürgerätes betrachtet von der Anbauseite her.

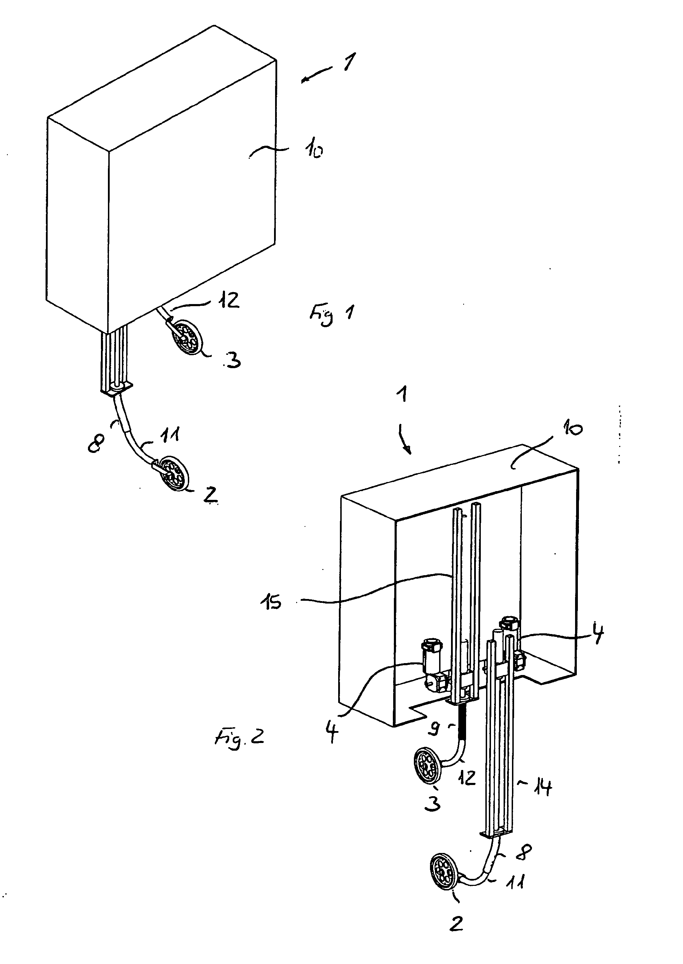

Fig. 1 zeigt in einer so genannten Draufsichtdarstellung ein Spürgerät 1 mit einem Gehäuse 10 mit Spürrädern 2, 3, die an Spürarmen 11, 12 befestigt sind.

Fig. 2 zeigt den Innenaufbau des Spürgerätes 1, das im Gehäuse 10 untergebracht ist und Spürräder 2, 3 an den Spürarmen 11, 12 umfasst, die ihrerseits in einer Linearführung 14, 15 eines Linearantriebes 4 eingebunden sind. Durch die Linearführung 14, 15 mit seitlicher Begrenzung für jedes der Spürräder 2, 3 besteht im eingefahrenen Zustand eine formschlüssige Verbindung, sodass die Spürräder 2, 3 sich nicht seitlich wegbewegen und beim Einfahren nicht verkannten können.

Die Spürräder 2, 3 werden in bekannter Art eine ebenfalls im / am Gehäuse 10 einbindbaren Sensor (nicht näher dargestellt) zugeführt. Frei wählbar ist dabei, ob ein zentraler Sensor genutzt wird oder für beide Spürräder 2, 3 ein gemeinsamer. Bei Anwendung mit einem festen Sensorpunkt kann die Linearführung 14 so gestaltet werden, dass die Spürräder 2, 3 über eine Drehbewegung auf den gemeinsamen Punkt / Sensor fahren.

Federnde Elemente 8, 9 dienen dazu, dass die Spürräder 2, 3 trotz Bodenunebenheiten beim Spüren nicht den Bodenkontakt verlieren. Die Federrate der federnden Elemente 8, 9 kann beilspielsweise durch praktische Erfahrungen definiert und fest eingestellt werden. Dazu werden in einer einfachsten Form Federn mit einer entsprechenden Federcharakteristik verwendet. Alternativ können aber auch Drucksensoren (nicht näher dargestellt) eingesetzt werden, wodurch eine Nachregelung der Federelemente realisierbar ist.

## Patentansprüche

1. Radspürgerät (1) für einen ABC-Einsatz mit einem Gehäuse (10) und mit wenigstens einem Spürrad (2, 3), das an einem Spürarm (11, 12) befestigt ist, **dadurch gekennzeichnet, dass** ein Linearantrieb (4) mit Linearführung (14, 15) eingebunden ist, entlang der das Anheben und Senken des am Spürarm (11, 12) angebrachten Spürrades (2, 3) erfolgt.

2. Radspürgerät (1) nach Anspruch 1, **dadurch gekennzeichnet, dass** ein oder mehrere federnde Elemente (8, 9) am Spürarm (11, 12) eingebunden sind, die dazu dienen, dass das jeweilige Spürrad (2, 3) trotz Bodenunebenheiten beim Spüren nicht den Bodenkontakt verliert.

3. Radspürgerät (1) nach Anspruch 1 oder 2, **dadurch gekennzeichnet, dass** im / am Gehäuse (10) zumindest ein Sensor eingebunden ist, auf den die Spürräder (2, 3) geführt werden.

4. Radspürgerät nach einem der Ansprüche 1 bis 3, **dadurch gekennzeichnet, dass** die Linearführung (14, 15) seitliche Begrenzungen aufweist, innerhalb derer der Spürarm (11, 12) das Anheben und Senken des am Spürarm (11, 12) angebrachten Spürrades (2, 3) geführt werden kann.

## Claims

1. Wheel detector (1) for NBC applications having a housing (10) and having at least one sensor wheel (2, 3) which is fastened on a sensor arm (11, 12), **characterized in that** a linear drive (4) with linear guide (14, 15) is integrated, along which linear drive the raising and lowering of the sensor wheel (2, 3) attached to the sensor arm (11, 12) are carried out.

2. Wheel detector (1) according to Claim 1, **characterized in that** one or more resilient elements (8, 9) on the sensor arm (11, 12) are integrated, which serve the purpose that the respective sensor wheel (2, 3) does not lose contact with the ground during sensing, despite unevenness of the ground.

3. Wheel detector (1) according to Claim 1 or 2, **characterized in that** at least one sensor is integrated in/on the housing (10), onto which sensor the sensor wheels (2, 3) are guided.

4. Trace sensor wheel according to one of Claims 1 to 3, **characterized in that** the linear guide (14, 15) has lateral restrictions, within which the sensor arm (11, 12) can guide the raising and lowering of the sensor wheel (2, 3) attached to the sensor arm (11, 12).

## Revendications

1. Détecteur à roues (1) pour une utilisation NBC (nucléaire, biologique, chimique), comprenant un boîtier (10) et comprenant au moins une roue de détection (2, 3) qui est fixée à un bras de détection (11, 12), **caractérisé en ce qu'**un entraînement linéaire (4) comportant un guide linéaire (14, 15) est intégré, le long duquel guide linéaire s'effectuent le soulèvement et l'abaissement de la roue de détection (2, 3) montée sur le bras de détection (11, 12).

2. Détecteur à roues (1) selon la revendication 1, **caractérisé en ce qu'**un ou plusieurs éléments élastiques (8, 9) sont intégrés sur le bras de détection (11, 12), lesquels font en sorte que la roue de détection (2, 3) respective reste en contact avec le sol malgré des irrégularités du sol lors de la détection.

3. Détecteur à roues (1) selon la revendication 1 ou 2, **caractérisé en ce qu'**au moins un capteur est intégré dans/sur le boîtier (10), sur lequel capteur les roues de détection (2, 3) sont guidées.

4. Détecteur à roues selon l'une quelconque des revendications 1 à 3, **caractérisé en ce que** le guide linéaire (14, 15) présente des limites latérales à l'intérieur desquelles le bras de détection (11, 12) peut guider le soulèvement et l'abaissement de la roue de détection (2, 3) montée sur le bras de détection (11, 12).
